# EUROPÄISCHE PATENTSCHRIFT

(11) **EP 4 208 360 B1**
(45) Veröffentlichungstag und Bekanntmachung des Hinweises auf die Patenterteilung: **18.12.2024**
(21) Anmeldenummer: 21762667.0
(22) Anmeldetag: 12.08.2021
(51) Int. Cl.: B60K 1/02, B60K 17/08, B60K 17/02, F16H 3/093

(54) **REIN ELEKTRISCHES ANTRIEBSSYSTEM MIT ZWEI MOTOREN**
PURELY ELECTRIC DRIVE SYSTEM COMPRISING TWO MOTORS
SYSTÈME D'ENTRAÎNEMENT PUREMENT ÉLECTRIQUE COMPRENANT DEUX MOTEURS

(30) Priorität: 03.09.2020 DE 102020005394
(43) Veröffentlichungstag der Anmeldung: 12.07.2023
(73) Patentinhaber: Daimler Truck AG, 70771 Leinfelden-Echterdingen (DE)
(72) Erfinder: STEFFENS, Frank, 73760 Ostfildern (DE); STRÖLIN, Marc, 73765 Neuhausen (DE); LUCKMANN, Jens, 71364 Winnenden (DE)
(74) Vertreter: JENSEN & SON
(86) Internationale Anmeldenummer: PCT/EP2021/072515
(87) Internationale Veröffentlichungsnummer: WO 2022/048882

(56) Entgegenhaltungen:
- EP-A1- 2 450 215
- WO-A1-2021/073748
- CN-A- 104 948 716
- CN-A- 112 590 542
- DE-A1- 102008 002 380

## Beschreibung

Die Erfindung betrifft ein rein elektrisches Antriebssystem, insbesondere für ein Kraftfahrzeug, nach der im Oberbegriff von Anspruch 1 näher definierten Art.

Neben hybridisierten Antriebssystemen, welche sowohl mit einem Verbrennungsmotor als auch mit Elektromotoren den Antrieb eines Fahrzeugs realisieren, werden zunehmend auch rein elektrische Antriebssysteme immer wichtiger. Diese können ein Antriebssystem für eine rein elektrisch angetriebene Achse mit einer über ein Getriebe schaltbaren Übersetzung, insbesondere mit mehreren Gangstufen umfassen. Als Stand der Technik orientiert sich die hier vorliegende Anmeldung an der DE 10 2008 002 380 A1. Diese zeigt einige der Merkmale des Oberbegriffs des hier geltenden Anspruchs, jedoch anders als bei der hier vorliegenden Erfindung an einem Hybridsystem und nicht an einem rein elektrischen Antriebssystem. Der Aufbau sieht dabei ein Gruppengetriebe mit einer Hauptgruppe und einer Range-Gruppe vor, welche einen Planetensatz aufweist. Dabei sind zwei elektrische Maschinen vorgesehen, welche jeweils eine eigene Eingangswelle der Hauptgruppe treiben, während ein Verbrennungsmotor die Ausgangswelle der Hauptgruppe über eine schaltbare Kupplung antreiben kann. Diese Ausgangswelle der Hauptgruppe ist mit der Sonne des Planetensatzes der Range-Gruppe verbunden, deren Planetenträger den Abtrieb des Hybridantriebssystems darstellt. Ferner ist aus der AT520555A4 ein Antriebssystem mit 2 elektrischen Maschinen und einem Getriebe in Vorgelegebauweise bekannt. Schließlich ist aus der DE 10 2008 002 380 A1 ein Hybridgetriebe mit zwei elektrischen Maschinen, einer Getriebehauptgruppe und einer Getriebe-Rangegruppe in Planetenbauweise bekannt.

Aus EP 2 450 215 A1 ist ein Hybridgetriebe bekannt, beispielsweise für ein Kraftfahrzeug, umfassend zwei Getriebeeingangswellen, die achsparallel zueinander angeordnet sind, und eine achsparallel zwischen beiden Getriebeeingangswellen angeordnete Getriebeausgangswelle, die ein Vorgelegegetriebe bilden, bei dem eine der beiden Getriebeeingangswellen einem Verbrennungsmotor zugeordnet ist und die andere Getriebeeingangswelle einer Elektromaschine zugeordnet ist, und bei dem in mindestens zwei Radsatzebenen Zahnräder zu Bildung von Gängen angeordnet sind, wobei als Losräder ausgebildete Zahnräder über Schaltvorrichtungen drehfest mit den zugehörigen Wellen verbindbar sind. Damit das Hybridgetriebe eine hohe Funktionalität sowie Leistungsfähigkeit besitzt und hinsichtlich dieser Leistungsfähigkeit kompakt und Konstruktions- sowie Kostenaufwand vergleichsweise günstig ist, ist auf der Getriebeausgangswelle mindestens ein Planetradgetriebe angeordnet, das mit den Getriebeeingangswellen koppelbar ist, und das wahlweise verblockbar ist, frei mitlaufend betreibbar ist, oder so schaltbar ist, dass sich in Wirkverbindung mit der Vorgelegegetriebe jeweils für zwei Komponenten des Planetengetriebes feste Drehzahlverhältnisse ergeben.

Aus WO 2021/073748 A1 ist ein Antriebsstrang für ein Fahrzeug bekannt, der eine erste elektrische Maschine, eine zweite elektrische Maschine und ein Getriebe umfasst, das so angeordnet ist, dass es Drehmoment von den elektrischen Maschinen auf eine Antriebsachse überträgt, wobei das Getriebe umfasst folgendes: erste und zweite Eingangswellen, die so angeordnet sind, dass sie von der ersten bzw. zweiten elektrischen Maschine angetrieben werden, eine gemeinsame Ausgangswelle, einen ersten Primärzahnradsatz, der Folgendes umfasst: erste und zweite Eingangsräder, über die das Drehmoment von der ersten und zweiten Eingangswelle bzw. zur Abtriebswelle übertragbar ist, einen zweiten Primärradsatz, der Folgendes umfasst: dritte und vierte Eingangsräder, über die das Drehmoment von der ersten bzw. zweiten Eingangswelle auf die Ausgangswelle übertragbar ist; Mittel zum voneinander Trennen der jeder einzelnen elektrischen Maschine und von der Abtriebswelle. Das Getriebe umfasst eine Zwischenwelle, die durch das erste und/oder das zweite Eingangszahnrad antreibbar ist, und einen Hilfszahnradsatz mit zwei Übersetzungsverhältnissen, der zwischen der Zwischenwelle und der gemeinsamen Ausgangswelle angeordnet ist, wobei zumindest das erste und das zweite Eingangszahnrad dazu angeordnet sind, über die Zwischenwelle und den Hilfsradsatz die Abtriebswelle anzutreiben.

CN 104948716 A beschreibt ein längs angeordnetes Zweimotoren-Schaltgetriebe. Das Getriebe nutzt zwei Motoren als Leistungseingang. Durch die sinnvolle Anordnung eines Festwellengetriebes und einer Schaltmuffe ist sichergestellt, dass es beim Schaltvorgang nicht zu Leistungsunterbrechungen kommt; Währenddessen passen die Motoren während des Schaltvorgangs aktiv die Geschwindigkeitsdifferenz an, sodass die Motoren innerhalb des richtigen Betriebsbereichs arbeiten sowie besondere Anforderungen erfüllen können. Unter besondere Anforderungen ist z.B. das häufige Starten und Parken von Citybussen zu verstehen. Hier wird die Leistung des einen Motors und die Leistung des anderen Motors jeweils über Eingangswellen in das Getriebe eingeleitet, wobei das Getriebe mit der Leistung des einen Motors und der Leistung des anderen Motors gekoppelt ist.

Die Aufgabe der Erfindung besteht nun darin, ein rein elektrisches Antriebssystem mit den Merkmalen im Oberbegriff des Anspruchs 1 zu schaffen, welches einen komfortablen und langlebigen Betrieb ermöglicht.

Erfindungsgemäß wird diese Aufgabe durch ein rein elektrisches Antriebssystem mit den Merkmalen im Anspruch 1, und hier insbesondere im kennzeichnenden Teil des Anspruchs 1 gelöst. Vorteilhafte Ausgestaltungen und Weiterbildungen ergeben sich aus den hiervon abhängigen Unteransprüchen.

Das rein elektrische Antriebssystem gemäß der Erfindung nutzt, ähnlich wie das Hybridantriebssystem im eingangs genannten Stand der Technik, zwei elektrische Motoren, die über ein Gruppengetriebe mit einem Hauptgetriebe und einer Range-Gruppe, die einen Planetensatz umfasst, eine Abtriebswelle des Gruppengetriebes antreiben. Über diese werden dann beispielsweise eine oder mehrere angetriebene Achsen eines Fahrzeugs, insbesondere eines Nutzfahrzeugs, angetrieben. Erfindungsgemäß ist es dabei so, dass koaxial zur ersten Eingangswelle der Hauptgruppe genau zwei Losräder vorgesehen sind, ebenso wie koaxial zur zweiten Eingangswelle der Hauptgruppe. Damit entstehen über die zwei elektrischen Maschinen in Summe vier diskret schaltbare Gänge und bei Bedarf entsprechende virtuelle Zwischengänge, ohne dass ein entsprechender Aufwand bezüglich weiterer Losräder betrieben werden muss, wie es beispielsweise bei einem Hybridantriebssystem der Fall wäre.

Durch die Verwendung von jeweils genau zwei Losrädern auf den beiden Eingangswellen und dementsprechend genau zwei Festrädern zum Verbinden der Ausgangswelle der Hauptgruppe mit ihren Eingangswellen, indem jeweils eines der Losräder der Eingangswellen mit dem ersten Festrad der Ausgangswelle kämmt und die beiden weiteren Losräder der jeweiligen Eingangswelle mit dem zweiten Festrad der Ausgangswelle, entsteht ein Aufbau, welcher innerhalb der jeweiligen Stellung der Range-Gruppe eine Schaltbarkeit unter Last ermöglicht. Dies ist dabei mit einfachen Klauenschaltelementen, wie es gemäß einer besonders günstigen Weiterbildung des erfindungsgemäßen elektrischen Antriebssystems vorgesehen ist, möglich. Anders als aufwändige und verschleißempfindliche Reibschaltelemente kann nun also über ein entsprechendes Schalten der Losräder auf der jeweiligen Eingangswelle unter Last und mit einer Synchronisierung mittels der elektrischen Maschine einfach, komfortabel und verschleißoptimiert geschaltet werden.

Ein weiterer Vorteil wird durch die Positionierung der elektrischen Maschinen auf den beiden unterschiedlichen Eingangswellen erzielt, sodass virtuelle Zwischengänge möglich sind, welche insbesondere die Anfahrperformance verbessern. Dies trifft insbesondere bei schweren Fahrzeugen zu, weshalb der bevorzugte, nicht jedoch ausschließliche Einsatzzweck im Bereich der Nutzfahrzeuge vorgesehen ist.

Ein weiterer Vorteil, welcher sich durch den Einsatz der beiden elektrischen Maschinen ergibt, liegt darin, dass im Teillastbetrieb, welcher beispielsweise Nutzfahrzeugfernverkehr in der Größenordnung von 70% des gesamten Fahranteils ausmacht, eine der beiden elektrischen Maschinen stillgelegt werden kann, was sich insgesamt auf die Lebensdauer und Effizienz dieser Aggregate auswirkt.

Koaxial zu der Ausgangswelle der Hauptgruppe ist dabei ferner erfindungsgemäß ein drittes Festrad angeordnet, das permanent mit einem vierten Festrad kämmt, welches seinerseits drehfest mit dem ersten Element des Planetensatzes verbunden ist. Eine solche Anbindung des Planetensatzes und damit der Range-Gruppe des Gruppengetriebes erlaubt es, den Aufbau effizient und kompakt zu realisieren.

Ferner kämmt erfindungsgemäß ein drehfest mit der Abtriebswelle verbundenes Zahnrad mit dem Differentialrad, welches seinerseits mit einem Differentialkäfig des Differentialgetriebes drehfest verbunden ist.

Ferner sind erfindungsgemäß eine Drehachse der ersten Eingangswelle, eine Drehachse der zweiten Eingangswelle, eine Drehachse einer Sonnenwelle des Planetensatzes und eine Drehachse des Differentialrades allesamt parallel zueinander angeordnet.

Unter einer drehfesten Verbindung im Sinne der Erfindung ist dabei eine Verbindung zwischen sich drehenden und koaxial zueinander angeordneten Elementen zu verstehen, welche diese Elemente in der Art miteinander verbindet, dass sie mit derselben Winkelgeschwindigkeit umlaufen.

Wie oben bereits angedeutet, sind die Losräder entsprechend schaltbar mit ihren jeweiligen Eingangswellen verbunden, wobei gemäß einer sehr vorteilhaften Ausgestaltung der Erfindung im Bereich jeder der Eingangswellen jeweils ein erstes und ein zweites Schaltelement für das erste und zweite Losrad bzw. das dritte und vierte Losrad vorgesehen sind, wobei das jeweilige erste Schaltelement dazu eingerichtet ist, das erste bzw. dritte Losrad mit seiner jeweiligen Eingangswelle zu verbinden, und wobei das jeweilige zweite Schaltelement dazu eingerichtet ist, das zweite bzw. vierte Losrad mit seiner jeweiligen Eingangswelle zu verbinden. In Summe sind hier also vier Schaltelemente im Bereich der Eingangswellen vorgesehen, für jedes der Losräder eines. Diese sind so ausgestaltet, dass sie wahlweise das Losrad mit dessen Eingangswelle verbinden oder nicht, sodass dieses gegenüber der Eingangswelle frei umläuft. Dies reicht aus um in Summe vier Gänge realisieren zu können, wobei innerhalb derselben Stellung der Range-Gruppe diese Gänge lastschaltbar sind, und wobei der Antrieb wahlweise von der einen, der anderen oder beiden elektrischen Maschinen erfolgen kann.

Gemäß einer weiteren sehr vorteilhaften Ausgestaltung dieser Idee ist es dabei vorgesehen, dass das erste und das zweite Schaltelement der jeweiligen Eingangswelle zu einem Doppelschaltelement mit Neutralstellung und mit einem Aktuator zusammengefasst sind. Dieser Einsatz eines Doppelschaltelements für das erste und das zweite Schaltelement der jeweiligen Eingangswelle reduziert die gesamte benötigte Anzahl der Elemente letztlich auf zwei Doppelschaltelemente, eines je Eingangswelle. Über jeweils nur einen Aktuator kann jedes dieser Doppelschaltelemente angesteuert werden, sodass auch der Aufwand bezüglich der Aktuatorik reduziert wird, was insgesamt mit einer Verringerung der Komplexität der Konstruktion sowie mit einer Einsparung an Platz, Bauraum und Bauteilen einhergeht.

Innerhalb der Range-Gruppe ist es so, dass gemäß einer sehr vorteilhaften Weiterbildung des erfindungsgemäßen elektrischen Antriebssystems ein Bremsschaltelement zum Festbremsen des dritten Elements des Planetensatzes vorgesehen ist. Dadurch lässt sich die Übersetzung der Range-Gruppe verändern. Eine weitere sehr vorteilhafte Ausgestaltung sieht es ferner vor, dass alternativ oder insbesondere ergänzend hierzu ein Verblockungsschaltelement zum Verblocken des ersten und des dritten Elements des Planetensatzes vorgesehen ist.

Gemäß einer außerordentlich günstigen Weiterbildung, in welcher das Verblockungsschaltelement und das Bremsschaltelement beide vorhanden sind, können auch diese wieder zu einem Doppelschaltelement mit einem Aktuator zusammengefasst sein, sodass auch hier der Aufwand, vergleichbar wie oben bezogen auf jede der Eingangswellen entsprechend reduziert wird.

Wie oben bereits erwähnt, können die Rotoren der beiden elektrischen Maschinen mit der jeweiligen Eingangswelle der Hauptgruppe gekoppelt oder koppelbar sein. Gemäß einer außerordentlich günstigen Weiterbildung des erfindungsgemäßen elektrischen Antriebssystems ist dabei der Rotor der ersten elektrischen Maschine drehfest mit der ersten Eingangswelle verbunden und ein Rotor der zweiten elektrischen Maschine ist drehfest mit der zweiten Eingangswelle verbunden. Damit kann auf ein zusätzliches Schalt- bzw. Kupplungselement zwischen den Rotoren der jeweiligen elektrischen Maschinen und den Eingangswellen verzichtet werden, da die Eingangswellen ohnehin schaltbar mit den Losrädern in Verbindung stehen, und bei einer Neutralstellung der jeweiligen Schaltelemente der Losräder letztlich auch von der Ausgangswelle der Hauptgruppe des Gruppengetriebes entkoppelt bleiben, wodurch die zusätzlichen Kupplungselemente entbehrlich sind, sodass Kosten, Bauraum und Gewicht eingespart werden kann.

Innerhalb der Range-Gruppe kann es gemäß einer außerordentlich günstigen Weiterbildung des erfindungsgemäßen elektrischen Antriebssystems vorgesehen sein, dass ein Sonnenrad des Planetensatzes als das erste Element, ein Planetenträger als das zweite Element und ein Hohlrad als das dritte Element des Planetensatzes ausgebildet sind. Die Verbindung der Range-Gruppe zur Eingangswelle erfolgt in diesem Fall also über eine Anbindung der Sonne, der Abtrieb über den Planetenträger, während das Hohlrad gemäß der oben beschriebenen vorteilhaften Ausgestaltung über das Bremsschaltelement festgebremst und/oder über das Verblockungsschaltelement direkt drehfest mit der Sonne verbunden werden kann.

Das erste und das zweite Schaltelement auf der jeweiligen Eingangswelle können dabei, wie es oben bereits erwähnt worden ist, als formschlüssige Schaltelemente, insbesondere als Klauenschaltelemente, ausgebildet sein. Diese haben den großen Vorteil, dass sie weitgehend verschleißfrei arbeiten. Sie lassen sich aufgrund der speziellen Konstellation des erfindungsgemäßen Gruppengetriebes auch unter Last schalten, wobei der dabei gegebenenfalls auftretende Leistungsverlust durch ein Boosten mit der jeweils anderen elektrischen Maschine ganz oder zumindest teilweise ausgeglichen werden kann, diese Maschine kann also die Synchronisierung übernehmen, um ein hoch komfortables Schalten trotz der formschlüssigen Schaltelemente zu ermöglichen.

Weitere vorteilhafte Ausgestaltungen des erfindungsgemäßen elektrischen Antriebssystems ergeben sich auch aus dem Ausführungsbeispiel, welches nachfolgend unter Bezugnahme auf die Figuren näher beschrieben ist.

Dabei zeigen:
- Fig. 1: einen schematischen Radsatzplan eines möglichen Aufbaus eines elektrischen Antriebssystems gemäß der Erfindung; und
- Fig. 2: eine Schalttabelle, welche die Stellung der Schaltelemente in vier Gängen beschreibt.

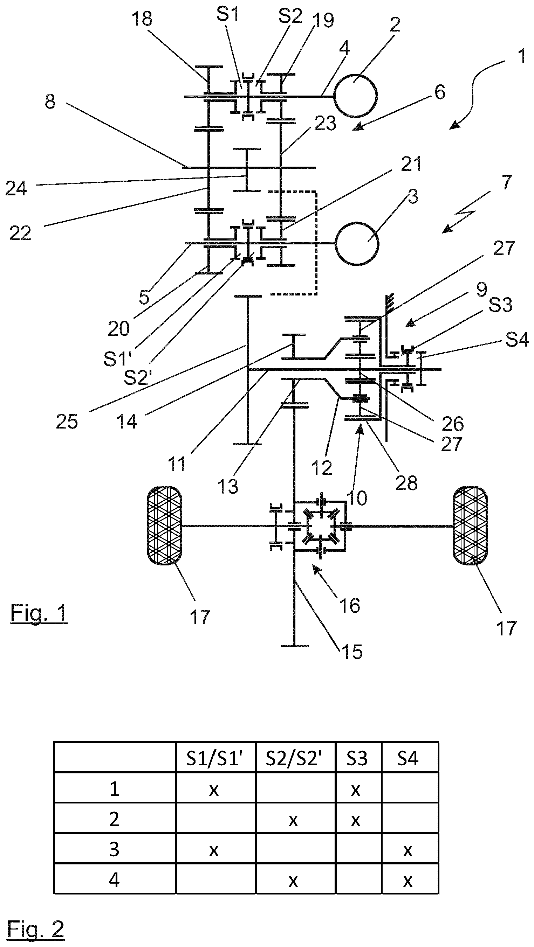

In der Darstellung der Fig. 1 ist ein insgesamt mit 1 bezeichnetes elektrisches Antriebssystem zu erkennen. Dieses verfügt über eine erste elektrische Maschine 2 sowie eine zweite elektrische Maschine 3. Ein Rotor der ersten elektrischen Maschinen 2 ist drehfest mit einer ersten Eingangswelle 4 und ein Rotor der zweiten elektrischen Maschine 3 ist drehfest mit einer zweiten Eingangswelle 5 verbunden. Die Eingangswellen 4, 5 sind Teil einer Hauptgruppe 6 eines Gruppengetriebes 7. Eine Ausgangswelle 8 der Hauptgruppe 6 des Gruppengetriebes 7 ist mit einer Range-Gruppe 9 gekoppelt, welche einen Planetensatz 10 aufweist. Hier ist die Ausgangswelle 8 der Hauptgruppe 6 mit einer Sonnenwelle 11 des Planetengetriebes 10 der Range-Gruppe 9 verbunden. Über einen Planetenträger 12 wird eine Abtriebswelle 13 des Gruppengetriebes 7 angetrieben, welche über ein Zahnrad 14 mit einem Differentialrad 15 kämmt, welches seinerseits mit einem Differentialkäfig eines Differentialgetriebes 16 drehfest verbunden ist. Über das Differentialgetriebe 16 werden schließlich zwei beispielhaft angedeutete angetriebene Räder 17 einer elektrisch angetriebenen Achse eines Fahrzeugs, insbesondere eines Nutzfahrzeugs angetrieben. Das Differentialgetriebe 16 ist dabei dem allgemeinen Fachwissen zuzurechnen, sodass hierauf nicht weiter eingegangen werden muss. Es ist hier beispielhaft als Differentialgetriebe 16 mit einer schaltbaren Ausgleichssperre dargestellt.

Die Abtriebswelle 14, welche koaxial zu der Sonnenwelle 11 angeordnet ist, ist vorzugsweise als Hohlwelle ausgebildet und umgebend zu der als Vollwelle ausgebildeten Sonnenwelle 11 angeordnet.

Hinsichtlich eines Drehmomentflusses ausgehend von den elektrischen Maschinen 2, 3 bis zu den Rädern 17 sind die elektrischen Maschinen 2, 3, die Hauptgruppe 6, die Range-Gruppe 9, das Differentialrad 15 und die Räder 17 in der genannten Reihenfolge nacheinander angeordnet.

Auf der ersten Eingangswelle 4 der Hauptgruppe 6 sind ein erstes Losrad 18 sowie ein zweites Losrad 19 angeordnet. Auf der zweiten Eingangswelle 5 sind ein drittes Losrad 20 und ein viertes Losrad 21 angeordnet. Außerdem sind erste Schaltelemente S1 bzw. S1' und zweite Schaltelemente S2 bzw. S2' auf der jeweiligen Eingangswelle 4, 5 so angeordnet, dass sie die koaxial zur jeweiligen Eingangswelle 4, 5 angeordneten Losräder 18, 19 bzw. 20, 21 jeweils mit der jeweiligen Eingangswelle 4, 5 drehfest verbinden können. Vorzugsweise sind die Schaltelemente S1/S2 und S1'/S2' als Doppelschaltelemente mit einer Neutralstellung ausgebildet, wie es hier dargestellt ist. Sie werden über einen einzigen Aktuator je Doppelschaltelement S1/S2 angesteuert.

Das erste Losrad 18 und das dritte Losrad 20 der jeweiligen Eingangswelle 4, 5 kämmen mit einem ersten Festrad 22 auf der Ausgangswelle. Das zweite Losrad 19 und das vierte Losrad 21 kämmen mit einem zweiten Festrad 23 auf der Ausgangswelle 8. Die Eingangswellen 4, 5 und die Ausgangswelle 8 sind ausschließlich über diese beiden Festräder 22, 23 miteinander verbunden. Sie sind anders als in dem hier dargestellten Radsatzschema typischerweise nicht in einer Ebene angeordnet. Deshalb kann axial zwischen den beiden Festrädern 22, 23 ein drittes Festrad 24 platziert werden, welches mit einem vierten Festrad 25 auf der Sonnenwelle 11 des Planetensatzes 10 kämmt und damit bei angetriebener Ausgangswelle 8 der Hauptgruppe 6 des Gruppengetriebes 7 eine Sonne 26 des Planetensatzes 10 antreibt. Das vierte Festrad 25 ist permanent drehfest mit der Sonne 26 des Planetensatzes 10 verbunden. Der als Range-Gruppe 9 genutzte Planetensatz 10 wird auf diese Art also über das dritte Zahnrad 24 und das vierte Zahnrad 25 von der Ausgangswelle 8 der Hauptgruppe 6 angetrieben. In der Darstellung des Radsatzplans ist der Umstand, dass das dritte Festrad 24 mit dem vierten Festrad 25 permanent kämmt, über eine gestrichelte Linie entsprechend angedeutet.

Das Zahnrad 14 ist vorteilhaft axial zwischen dem vierten Festrad 25 und dem Planetensatz 10 angeordnet.

Vorteilhaft sind das vierte Festrad 25 sowie entweder das erste Schaltelement S1, S1' oder das zweite Schaltelement S2, S2' axial überlappend zueinander angeordnet, so dass sich insgesamt eine sehr kompakte Anordnung ergibt.

Der Begriff "axial" bezieht sich dabei auf eine axiale Richtung, und mit der axialen Richtung ist die Richtung einer Drehachse der Ausgangswelle 8 beziehungsweise der Drehachse der ersten Eingangswelle 4 beziehungsweise der Drehachsen anderen parallel hierzu angeordneten Wellen gemeint.

Planetenräder 27 auf dem Planetenträger 12 des Planetensatzes 10 kämmen entsprechend mit der Sonne 26 und einem Hohlrad 28 als drittes Element des Planetensatzes 10. Der Antrieb erfolgt also über die Sonne 26 als erstes Element, der Abtrieb über die Planetenräder 27 bzw. ihren Planetenträger 12, der das zweite Element des Planetensatzes darstellt. Bei Bedarf ist das Hohlrad 28 über ein Bremsschaltelement S3 festzubremsen. Das Hohlrad 28 ist dann drehfest beispielsweise mit dem Gehäuse des Gruppengetriebes 7 verbunden und dreht sich entsprechend nicht. Dies ergibt eine erste Übersetzung der Range-Gruppe 9. Über ein Verblockungsschaltelement S4, welches wiederum als Doppelschaltelement mit dem Bremsschaltelement S3 zusammengefasst werden kann, ist es auch möglich, die Sonne 26 als erstes Element des Planetensatzes 10 mit dem Hohlrad 28 zu verbinden bzw. zu verblocken. Dadurch ergibt sich eine andere Übersetzung zwischen der als Eingangswelle in die Range-Gruppe wirkenden Sonnenwelle 11 und dem mit der Abtriebswelle 13 verbundenen Planetenradträger 12.

Der Planetensatz 10 ist vorteilhaft axial überlappend zu der ersten elektrischen Maschine 2 und auch axial überlappend zu der zweiten elektrischen Maschine 3 angeordnet.

Mit dem Begriff "axial überlappend" ist im Hinblick auf zwei sich axial überlappende Bauteile gemeint, dass sich zumindest ein Teil des einen Bauteils sowie zumindest ein Teil des anderen Bauteiles in einem gleichen axialen Bereich angeordnet sind. Der gleiche axiale Bereich ist durch eine gleiche axiale Koordinate definiert.

Vorteilhaft sind die Ausgangswelle 8, die Sonnenwelle 11 und eine Drehachse des Differentialrades 15 im Wesentlichen in einer gemeinsamen Ebene angeordnet. Vorteilhaft sind die beiden Eingangswellen 4, 5 in einer weiteren Ebene angeordnet, wobei die weitere Ebene im Wesentlichen senkrecht zu der gemeinsamen Ebene angeordnet ist.

In der Darstellung der Fig. 2 sind die vier einzeln schaltbaren Gänge nun anhand einer Schaltmatrix prinzipmäßig angedeutet. In der ersten Spalte findet sich der jeweilige Gang, in der zweiten Spalte die Stellung des ersten Schaltelements S1 oder des ersten Schaltelements S1' auf der jeweiligen Eingangswelle 4, 5. Die zweite Spalte zeigt entsprechend das zweite Schaltelement S2 bzw. das zweite Schaltelement S2', die dritte Spalte den Zustand des dritten Schaltelements, also des Bremsschaltelements S3 und die vierte Spalte den Zustand des Verblockungsschaltelements S4. Beim ersten Gang ist das Schaltelement S1 und/oder das Schaltelement S1' eingelegt, das erste Losrad 18 oder das dritte Losrad 20 sind also mit der jeweiligen Eingangswelle 4 oder 5 verbunden, je nachdem, welche der beiden elektrischen Maschinen 2, 3 antreibt, wobei bei Bedarf auch beide antreiben können. Gleichzeitig ist das Bremsschaltelement S3 verschaltet, sodass das Hohlrad 28 also drehfest beispielsweise am Gehäuse des Gruppengetriebes 7 festgebremst ist. Ohne dass sich diese Schaltstellung innerhalb der Range-Gruppe 9 ändert, kann nun durch ein Lösen des Schaltelements S1 bzw. S1' und ein Einlegen des Schaltelements S2 bzw. S2', und zwar auch unter Last, vom ersten in den zweiten Gang gewechselt werden, wobei durch die elektrischen Maschinen 2, 3 dieser Schaltvorgang bei Bedarf synchronisiert werden kann. Sehr komfortabel ist es also möglich, zwischen den Gängen 1, 2 oder 3, 4 zu schalten und innerhalb der jeweiligen Stellung der Range-Gruppe 9 die beiden darauf bezogenen Gänge 1, 2 oder 3, 4 lastschaltbar zu machen. Hierfür ist, und dies ist ein entscheidender Vorteil gegenüber dem Stand der Technik, kein Reibschaltelement notwendig, sondern die Schaltelemente S1 und S2 bzw. S1' und S2' können als formschlüssige Schaltelemente, insbesondere als Klauenschaltelemente ausgebildet sein. Für den dritten und den vierten Gang wiederholt sich dieses Schaltschema nochmals, wobei im Unterschied zu den Gängen 1 und 2 die Range-Gruppe 9 nun so geschaltet ist, dass das Verblockungsschaltelement S4 aktiv und das Bremsschaltelement S3 entsprechend gelöst ist.

Durch eine Positionierung der beiden elektrischen Maschinen 2, 3 auf unterschiedliche Eingangswellen 4, 5 und damit letztlich auf unterschiedliche Gänge lassen sich außerdem virtuelle Zwischengänge ermöglichen, indem beide elektrischen Maschinen 2, 3 unterschiedlich auf die Ausgangswelle 8 treiben. Die so erreichbaren Zwischengänge können insbesondere die Anfahrperformance bei schweren Fahrzeugen, wie insbesondere Nutzfahrzeugen, verbessern. Im regulären Betrieb, welcher sehr häufig ein Teillastbetrieb ist, reicht dann der Betrieb einer der beiden elektrischen Maschinen 2, 3 aus, sodass die jeweils andere elektrische Maschine 2, 3 und die mit ihr verbundenen Teile der Hauptgruppe 6 des Gruppengetriebes 7 nicht genutzt werden müssen, sodass hier Verschleiß reduziert, der Wirkungsgrad gesteigert und die Lebensdauer des Aufbaus verlängert werden kann.

## Patentansprüche

1. Rein elektrisches Antriebssystem (1) mit einer ersten elektrischen Maschine (2), einer zweiten elektrischen Maschine (3), einem Differentialgetriebe (16), einem angetriebenen Rad (17) und einem Gruppengetriebe (7) mit einer Hauptgruppe (6) und einer Range-Gruppe (9), wobei die Range-Gruppe (9) einen Planetensatz (10) aufweist, wobei eine erste Eingangswelle (4) der Hauptgruppe (6) derart mit der ersten elektrischen Maschine (2) gekoppelt oder koppelbar ist, dass Drehmomente ausgehend von der ersten elektrischen Maschine (2) über die erste Eingangswelle (4) in das Gruppengetriebe (7) einleitbar sind, wobei eine zweite Eingangswelle (5) der Hauptgruppe (6) derart mit der zweiten elektrischen Maschine (3) gekoppelt oder koppelbar ist, dass Drehmomente ausgehend von der zweiten elektrischen Maschine (3) über die zweite Eingangswelle (5) in das Gruppengetriebe (7) einleitbar sind, wobei eine Ausgangswelle (8) der Hauptgruppe (6) permanent drehmomentübertragend mit einem ersten Element (26) des Planetensatzes (10) gekoppelt ist, und wobei ein zweites Element (12) des Planetensatzes permanent drehmomentübertragend mit einer Abtriebswelle (13) des Gruppengetriebes (7) gekoppelt ist,
wobei hinsichtlich eines Drehmomentflusses ausgehend von den elektrischen Maschinen (2, 3) bis zu dem Rad (17) die erste elektrische Maschine (2), die Hauptgruppe (6), die Range-Gruppe (9), ein Differentialrad (15) und das Rad (17) in der genannten Reihenfolge nacheinander angeordnet sind,
**dadurch gekennzeichnet, dass**
koaxial zu der ersten Eingangswelle (4) genau zwei Losräder (18, 19), nämlich ein erstes Losrad (18) und ein zweites Losrad (19) angeordnet sind, wobei koaxial zu der zweiten Eingangswelle (5) genau zwei weitere Losräder (20, 21), nämlich ein drittes Losrad (20) und ein viertes Losrad (21), angeordnet sind, wobei die beiden Eingangswellen (4, 5) über genau zwei koaxial zur Ausgangswelle (8) angeordnete Festräder (22, 23) mit der Ausgangswelle (8) gekoppelt oder koppelbar sind, wobei ein erstes Festrad (22) der Festräder (22, 23) mit dem ersten und dem dritten Losrad (18, 20) permanent in kämmendem Eingriff steht, und wobei ein zweites Festrad (23) der Festräder (22, 23) mit dem zweiten Losrad (19) und dem vierten Losrad (21) permanent kämmend in Eingriff steht,
wobei koaxial zur Ausgangswelle (8) ein drittes Festrad (24) angeordnet ist, das permanent mit einem vierten Festrad (25) kämmt, welches seinerseits drehfest mit dem ersten Element (26) des Planetensatzes (10) verbunden ist, wobei ein drehfest mit der Abtriebswelle (13) verbundenes Zahnrad (14) mit dem Differentialrad (15) kämmt, welches seinerseits mit einem Differentialkäfig des Differentialgetriebes (16) drehfest verbunden ist,
wobei eine Drehachse der ersten Eingangswelle (4), eine Drehachse der zweiten Eingangswelle (5), eine Drehachse einer Sonnenwelle (11) des Planetensatzes (10) und eine Drehachse des Differentialrades (15) allesamt parallel und achsversetzt zueinander angeordnet sind.

2. Rein elektrisches Antriebssystem (1) nach Anspruch 1,
**dadurch gekennzeichnet, dass**
im Bereich jeder der Eingangswellen (4, 5) jeweils ein erstes und ein zweites Schaltelement (S1, S1'; S2, S2') für das erste und zweite Losrad (18, 19) bzw. das dritte und vierte Losrad (20, 21) vorgesehen ist, wobei das jeweils erste Schaltelement (S1, S1') dazu eingerichtet ist, das erste Losrad (18) bzw. das dritte Losrad (20) mit seiner jeweiligen Eingangswelle (4, 5) zu verbinden, und wobei das jeweils zweite Schaltelement (S2, S2') dazu eingerichtet ist, das zweite Losrad (19) bzw. das vierte Losrad (21) mit seiner jeweiligen Eingangswelle (4, 5) zu verbinden.

3. Rein elektrisches Antriebssystem (1) nach Anspruch 2,
**dadurch gekennzeichnet, dass**
das erste und zweite Schaltelement (S1, S1'; S2, S2') der jeweiligen Eingangswelle (4, 5) zu einem Doppelschaltelement mit Neutralstellung und einem Aktuator zusammengefasst sind.

4. Rein elektrisches Antriebssystem nach Anspruch 2 oder Anspruch 3,
**dadurch gekennzeichnet, dass**
das vierte Festrad (25) axial überlappend zu dem ersten Schaltelement (S1, S1') oder zu dem zweiten Schaltelement (S2, S2`) angeordnet ist.

5. Rein elektrisches Antriebssystem (1) nach einem der Ansprüche 1 bis 4,
**dadurch gekennzeichnet, dass**
ein Bremsschaltelement (S3) zum Festbremsen des dritten Elements (28) des Planetensatzes (10) vorgesehen ist.

6. Rein elektrisches Antriebssystem (1) nach einem der Ansprüche 1 bis 5,
**dadurch gekennzeichnet, dass**
ein Verblockungsschaltelement (S4) zum Verblocken des ersten und dritten Elementes (26, 28) des Planetensatzes (10) vorgesehen ist.

7. Rein elektrisches Antriebssystem (1) nach Anspruch 5 und 6,
**dadurch gekennzeichnet, dass**
das Bremsschaltelement (S3) und das Verblockungsschaltelement (S4) zu einem Doppelschaltelement mit einem Aktuator zusammengefasst sind.

8. Rein elektrisches Antriebssystem (1) nach einem der vorhergehenden Ansprüche, **dadurch gekennzeichnet, dass**
ein Rotor der ersten elektrischen Maschine (2) drehfest mit der ersten Eingangswelle (4) und ein Rotor der zweiten elektrischen Maschine (3) drehfest mit der zweiten Eingangswelle (5) verbunden ist.

9. Rein elektrisches Antriebssystem (1) nach einem der vorhergehenden Ansprüche, **dadurch gekennzeichnet, dass**
in dem Planetensatz (10) eine Sonne (26) als erstes Element, ein Planetenträger (12) als zweites Element und ein Hohlrad (28) als drittes Element ausgebildet sind.

10. Rein elektrisches Antriebssystem (1) nach einem der Ansprüche 2 bis 9,
**dadurch gekennzeichnet, dass**
die den jeweiligen Eingangswellen (4, 5) zugeordneten Schaltelemente (S1, S1'; S2, S2') jeweils als formschlüssige Schaltelemente, insbesondere als Klauenschaltelemente, ausgeführt sind.

11. Rein elektrisches Antriebssystem (1) nach einem der vorhergehenden Ansprüche, **dadurch gekennzeichnet, dass**
der Planetensatz (10) axial überlappend zu der ersten elektrischen Maschine (2) und axial überlappend zu der zweiten elektrischen Maschine (3) angeordnet ist.

12. Rein elektrisches Antriebssystem (1) nach einem der vorhergehenden Ansprüche, **dadurch gekennzeichnet, dass**
die Abtriebswelle (13) als Hohlwelle ausgebildet und koaxial sowie umgebend zu der Sonnenwelle 11 angeordnet ist.

## Claims

1. A purely electric drive system (1) comprising a first electric machine (2), a second electric machine (3), a differential transmission (16), a driven wheel (17) and a group transmission (7) comprising a main group (6) and a range group (9), wherein the range group (9) includes a planetary set (10), wherein a first input shaft (4) of the main group (6) is coupled or coupleable with the first electric machine (2) such that torques from the first electric machine (2) can be introduced into the group transmission (7) via the first input shaft (4), wherein a second input shaft (5) of the main group (6) is coupled or coupleable with the second electric machine (3) such that torques from the second electric machine (3) can be introduced into the group transmission (7) via the second input shaft (5), wherein an output shaft (8) of the main group (6) is permanently coupled with a first element (26) of the planetary set (10) for transmitting torque, and wherein a second element (12) of the planetary set is permanently coupled with a driven shaft (13) of the group transmission (7) for transmitting torque,
wherein, with respect to a torque flow from the electric machines (2, 3) to the wheel (17), the first electric machine (2), the main group (6), the range group (9), a differential wheel (15) and the wheel (17) are sequentially disposed in the stated order,
**characterised in that**
exactly two idler wheels (18, 19), namely a first idler wheel (18) and a second idler wheel (19), are disposed coaxially to the first input shaft (4), wherein exactly two further idler wheels (20, 21), namely a third idler wheel (20) and a fourth idle wheel (21), are disposed coaxially to the second input shaft (5), wherein the two input shafts (4, 5) are coupled or coupleable with the output shaft (8) via exactly two fixed wheels (22, 23) disposed coaxially to the output shaft (8), wherein a first fixed wheel (22) of the fixed wheels (22, 23) is in permanent intermeshing engagement with the first and the third idler wheel (18, 20), and wherein a second fixed wheel (23) of the fixed wheels (22, 23) is in permanent intermeshing engagement with the second idler wheel (19) and the fourth idler wheel (21),
wherein a third fixed wheel (24) is disposed coaxially to the output shaft (8) and permanently intermeshed with a fourth fixed wheel (25), which is in turn non-rotatably connected to the first element (26) of the planetary set (10), wherein a gear wheel (14) non-rotatably connected to the driven shaft (13) is intermeshed with the differential wheel (15), which is in turn non-rotatably connected to a differential cage of the differential transmission (16),
wherein an axis of rotation of the first input shaft (4), an axis of rotation of the second input shaft (5), an axis of rotation of a sun shaft (11) of the planetary set (10), and an axis of rotation of the differential wheel (15) are all disposed in parallel and axially offset from one another.

2. The purely electric drive system (1) according to claim 1,
**characterised in that**
a first and a second switching element (S1, S1'; S2, S2') for each of the first and the second idler wheel (18, 19), and each of the third and the fourth idler wheel (20, 21), respectively is provided in the region of each of the input shafts (4, 5), wherein the respective first switching element (S1, S1') is arranged to connect the first idler wheel (18) and the second idler wheel (20) to their respective input shaft (4, 5), and wherein the respective second switching element (S2, S2') is arranged to connect the second idler wheel (19) and the fourth idler wheel (21) to their respective input shafts (4, 5).

3. The purely electric drive system (1) according to claim 2,
**characterised in that**
the first and the second switching element (S1, ST; S2, S2') of the respective input shaft (4, 5) are combined into a dual switching element having a neutral position and an actuator.

4. The purely electric drive system according to claim 2 or claim 3, **characterised in that**
the fourth fixed wheel (25) is disposed axially overlapping the first switching element (S1, ST) or the second switching element (S2, S2').

5. The purely electric drive system (1) according to one of claims 1 to 4, **characterised in that**
a braking switching element (S3) for locking the third element (28) of the planetary set (10) is provided.

6. The purely electric drive system (1) according to one of claims 1 to 5, **characterised in that**
an interlocking switching element (S4) for interlocking the first and the third element (26, 28) of the planetary set (10) is provided.

7. The purely electric drive system (1) according to claims 5 and 6, **characterised in that**
the braking switching element (S3) and the interlocking switching element (S4) are combined into a dual switching element having an actuator.

8. The purely electric drive system (1) according to one of the preceding claims, **characterised in that**
a rotor of the first electric machine (2) is non-rotatably connected to the first input shaft (4), and a rotor of the second electric machine (3) is non-rotatably connected to the second input shaft (5).

9. The purely electric drive system (1) according to one of the preceding claims, **characterised in that**
a sun (26) as a first element, a planet carrier (12) as a second element, and a ring wheel (28) as a third element are formed in the planetary set (10).

10. The purely electric drive system (1) according to one of claims 2 to 9, **characterised in that**
the switching elements (S1, S1'; S2, S2') associated with the respective input shafts (4, 5) are each designed as positive-fit switching elements, in particular as pawl switching elements.

11. The purely electric drive system (1) according to one of the preceding claims, **characterised in that**
the planetary set (10) is disposed axially overlapping the first electric machine (2) and axially overlapping the second electric machine (3).

12. The purely electric drive system (1) according to one of the preceding claims, **characterised in that**
the driven shaft (13) is formed as a hollow shaft and is disposed coaxially with and surrounding the sun shaft (11).

## Revendications

1. Système d'entraînement purement électrique (1) avec un premier moteur électrique (2), un second moteur électrique (3), un engrenage différentiel (16), une roue entraînée (17) et un engrenage en groupe (7) avec un groupe principal (6) et un groupe de gamme (9), dans lequel le groupe de gamme (9) présente un ensemble de planétaires (10), dans lequel un premier arbre d'entrée (4) du groupe principal (6) est couplé ou peut être couplé au premier moteur électrique (2) de telle sorte que des couples de rotation peuvent être introduits dans l'engrenage en groupe (7) en partant du premier moteur électrique (2) par le biais du premier arbre d'entrée (4), dans lequel un second arbre d'entrée (5) du groupe principal (6) est couplé ou peut être couplé au second moteur électrique (3) de telle sorte que des couples de rotation peuvent être introduits dans l'engrenage en groupe (7) en partant du second moteur électrique (3) par le biais du second arbre d'entrée (5), dans lequel un arbre de sortie (8) du groupe principal (6) est couplé en permanence à un premier élément (26) de l'ensemble de planétaires (10) en transmettant un couple de rotation, et dans lequel un second élément (12) de l'ensemble de planétaires est couplé en permanence à un arbre mené (13) de l'engrenage en groupe (7) en transmettant un couple de rotation,
dans lequel en ce qui concerne un flux de couple de rotation partant des moteurs électriques (2, 3) jusqu'à la roue (17), le premier moteur électrique (2), le groupe principal (6), le groupe de gamme (9), un roue différentielle (15) et la roue (17) sont disposés successivement dans l'ordre cité,
**caractérisé en ce que**
exactement deux roues libres (18, 19), à savoir une première roue libre (18) et une deuxième roue libre (19), sont disposées de manière coaxiale au premier arbre d'entrée (4), dans lequel exactement deux autres roues libres (20, 21), à savoir une troisième roue libre (20) et une quatrième roue libre (21), sont disposées de manière coaxiale au second arbre d'entrée (5), dans lequel les deux arbres d'entrée (4, 5) sont couplés ou peuvent être couplés à l'arbre de sortie (8) par le biais d'exactement deux roues fixes (22, 23) disposées de manière coaxiale à l'arbre de sortie (8), dans lequel une première roue fixe (22) des roues fixes (22, 23) est en permanence en engrènement avec la première et la troisième roue libre (18, 20), et dans lequel une deuxième roue fixe (23) des roues fixes (22, 23) est en permanence en engrènement avec la deuxième roue libre (19) et la quatrième roue libre (21),
dans lequel une troisième roue fixe (24) est disposée de manière coaxiale à l'arbre de sortie (8), laquelle s'engrène en permanence avec une quatrième roue fixe (25) qui est connectée de son côté de manière fixe en rotation au premier élément (26) de l'ensemble de planétaires (10), dans lequel une roue dentée (14) connectée de manière fixe en rotation à l'arbre mené (13) s'engrène avec la roue différentielle (15) qui est connectée de son côté de manière fixe en rotation à une cage de différentiel de l'engrenage différentiel (16),
dans lequel un axe de rotation du premier arbre d'entrée (4), un axe de rotation du second arbre d'entrée (5), un axe de rotation d'un arbre solaire (11) de l'ensemble de planétaires (10) et un axe de rotation de la roue différentielle (15) sont tous disposés parallèlement et de manière décalée axialement l'un par rapport à l'autre.

2. Système d'entraînement purement électrique (1) selon la revendication 1, **caractérisé en ce que**
dans la région de chacun des arbres d'entrée (4, 5), un premier et un second élément de commutation (S1, S1' ; S2, S2') sont à chaque fois prévus pour la première et deuxième roue libre (18, 19) ou la troisième et quatrième roue libre (20, 21), dans lequel le premier élément de commutation respectif (S1, S1') est configuré pour connecter la première roue libre (18) ou la troisième roue libre (20) à son arbre d'entrée respectif (4, 5), et dans lequel le second élément de commutation respectif (S2, S2') est configuré pour connecter la deuxième roue libre (19) ou la quatrième roue libre (21) à son arbre d'entrée respectif (4, 5).

3. Système d'entraînement purement électrique (1) selon la revendication 2, **caractérisé en ce que**
le premier et second élément de commutation (S1, S1' ; S2, S2') de l'arbre d'entrée respectif (4, 5) sont réunis en un élément de commutation double avec une position neutre et un actionneur.

4. Système d'entraînement purement électrique selon la revendication 2 ou revendication 3,
**caractérisé en ce que**
la quatrième roue fixe (25) est disposée de manière chevauchante axialement au premier élément de commutation (S1, S1') ou au second élément de commutation (S2, S2').

5. Système d'entraînement purement électrique (1) selon une des revendications 1 à 4,
**caractérisé en ce que**
un élément de commutation de frein (S3) est prévu pour l'arrêt par freinage du troisième élément (28) de l'ensemble de planétaires (10).

6. Système d'entraînement purement électrique (1) selon une des revendications 1 à 5,
**caractérisé en ce que**
un élément de commutation de blocage (S4) est prévu pour le blocage du premier et troisième élément (26, 28) de l'ensemble de planétaires (10).

7. Système d'entraînement purement électrique (1) selon les revendications 5 et 6, **caractérisé en ce que**
l'élément de commutation de frein (S3) et l'élément de commutation de blocage (S4) sont réunis en un élément de commutation double avec un actionneur.

8. Système d'entraînement purement électrique (1) selon une des revendications précédentes,
**caractérisé en ce que**
un rotor du premier moteur électrique (2) est connecté de manière fixe en rotation au premier arbre d'entrée (4) et un rotor du second moteur électrique (3) est connecté de manière fixe en rotation au second arbre d'entrée (5).

9. Système d'entraînement purement électrique (1) selon une des revendications précédentes,
**caractérisé en ce que**
un soleil (26) est réalisé en tant que premier élément, une cage de transmission planétaire (12) est réalisée en tant que deuxième élément et une roue creuse (28) est réalisée en tant que troisième élément dans l'ensemble de planétaires (10).

10. Système d'entraînement purement électrique (1) selon une des revendications 2 à 9,
**caractérisé en ce que**
les éléments de commutation (S1, S1' ; S2, S2') associés aux arbres d'entrée respectifs (4, 5) sont conçus chacun en tant qu'élément de commutation à conjugaison de formes, notamment en tant qu'éléments de commutation à griffes.

11. Système d'entraînement purement électrique (1) selon une des revendications précédentes,
**caractérisé en ce que**
l'ensemble de planétaires (10) est disposé de manière chevauchante axialement au premier moteur électrique (2) et de manière chevauchante axialement au second moteur électrique (3).

12. Système d'entraînement purement électrique (1) selon une des revendications précédentes,
**caractérisé en ce que**
l'arbre mené (13) est réalisé en tant qu'arbre creux et disposé de manière coaxiale ainsi qu'encerclante par rapport à l'arbre solaire (11).
